# EUROPÄISCHE PATENTSCHRIFT

(11) **EP 3 091 261 B1**
(45) Veröffentlichungstag und Bekanntmachung des Hinweises auf die Patenterteilung: **31.10.2018**
(21) Anmeldenummer: 16168330.5
(22) Anmeldetag: 04.05.2016
(51) Int. Cl.: F16L 5/02, F16L 21/00, F16L 25/14

(54) **MUFFENADAPTER**
SLEEVE ADAPTER
ADAPTATEUR A MANCHON

(30) Priorität: 04.05.2015 DE 202015102252 U
(43) Veröffentlichungstag der Anmeldung: 09.11.2016
(60) Teilanmeldung: 17170015.6
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- FR-A1- 2 673 263
- US-A- 2 226 067
- US-A- 4 627 647

## Beschreibung

Die Erfindung betrifft einen Muffenadapter.

Aus dem Bereich beispielsweise der Kanalisation ist es bekannt, Rohre oder Schächte mit vergleichsweise großen Wandstärken von beispielsweise 30 oder mehr Millimetern zu verwenden. Beispielsweise können Schächte oder Rohrleitungen aus Beton oder aus Steinzeug derartig große Wandstärken aufweisen, oder es können Rohre mit einer strukturierten Wand verwendet werden, die beispielsweise ein inneres, glattwandiges Rohr aus Kunststoff aufweisen und einen äußeren Wellrohrmantel ebenfalls aus Kunststoff, der zwar eine ebenfalls vergleichsweise dünne Wandstärke aufweist, durch seinen wellig strukturierten Verlauf allerdings für das gesamte Rohr bzw. den gesamten Schacht eine vergleichsweise große Wandstärke ergibt. Im Unterschied dazu weisen glattwandige Kunststoffrohre eine Wandstärke auf, die zwar je nach dem Nenndurchmesser unterschiedlich groß sein kann, jedoch üblicherweise unter der Wandstärke eines der oben genannten Rohre liegt.

Bei diesen Rohren oder Schächten mit vergleichsweise großer Wandstärke, die aus Beton, Steingut oder Kunststoffgebildet sind oder die eine strukturierte Wand aufweisen, ergibt sich in der Praxis häufig das Problem, dass der Innendurchmesser der Rohrabschnitte zwar genormt ist, herstellerspezifisch und je nach verwendetem Werkstoff jedoch unterschiedliche Außendurchmesser auftreten. Hieraus ergibt sich beispielsweise im Sanierungsfall oder auch im Falle eines Werkstoffwechsels, wie er aus unterschiedlichen Gründen auch bei Neuverlegungen vorgesehen werden kann das Problem, an einem vorhandenen Schacht, der eine Muffe zum Anschluss eines Spitzendes eines Rohrleitungsabschnitts aufweist, oder an das Muffenende eines vorhandenen Rohrabschnitts einen andersartigen Rohrabschnitt anschließen zu lassen. Dies kann beispielsweise der Fall sein, wenn jahrzehntealte Schächte bzw. Rohre repariert werden müssen und beispielsweise der damalige Rohrhersteller nicht mehr existiert, mithin Rohrabschnitte mit dem gleichen Außendurchmesser möglicherweise nicht problemlos verfügbar sind, oder wenn im Sanierungsfall ein Rohrabschnitt mit dünnerer Wandstärke verwendet werden soll, während die bereits vorhandenen Muffen in einem Schacht oder in einem Rohrabschnitt einen erheblich größeren Innendurchmesser aufweisen, der zur Aufnahme eines Rohrabschnitts mit gleichem Nenndurchmesser, aber entsprechend größerer Wandstärke dimensioniert ist.

Aus der FR 2 673 263 A1, der US 2 226 067 A und auch aus der US 4 627 647 A ist jeweils eine Dichtungsanordnung bekannt, bei welcher ein Dichtungsring einen umlaufenden Schlitz aufweist und ein ringförmiger, ein- oder mehrteiliger Keil in den Schlitz eingetrieben wird, um die Dichtung aufzuweiten.

Der Erfindung liegt die Aufgabe zugrunde, einen Rohrabschnitt anzugeben, der in Art eines Universal-Ersatzteils den Anschluss an Muffen mit unterschiedlich großen Innendurchmessern ermöglicht.

Diese Aufgabe wird durch einen Muffenadapter mit den Merkmalen des Anspruchs 1 gelöst. Vorteilhafte Ausgestaltungen der Erfindung sind in den Unteransprüchen beschrieben.

Die Erfindung schlägt mit anderen Worten einen Muffenadapter vor, der einerseits den an die Muffe anzuschließenden Rohrabschnitt aufweist. Außen um den Rohrabschnitt herum verläuft zirkumferent eine Dichtung aus einem elastisch verformbaren Werkstoff. Vorschlagsgemäß kann diese Dichtung verformt werden, beispielsweise gedehnt, gestreckt oder gespreizt werden, um den Muffenadapter an Muffen mit unterschiedlich großen Innendurchmessern anpassen zu können, z. B. indem die Dichtung dazu aufgeweitet wird. Hierzu ist wenigstens ein Dehnelement vorgesehen, welches radial innerhalb der Dichtung angeordnet ist, also zwischen dem Rohrabschnitt und der Dichtung. Das Dehnelement ist radial nach außen beweglich, so dass es die Wirkung hat, als wenn der Rohrabschnitt unterschiedlich große äußere Durchmesser aufweisen würde, und so dass die außen um das Dehnelement verlaufende Dichtung unterschiedlich stark, nämlich je nach Stellung des Dehnelements, aufgespreizt bzw. gedehnt werden kann und der Muffe innen dicht anliegen kann.

Vorteilhaft ist die Dichtung an einem Ende des Rohrabschnitts angeordnet, wobei dieses Ende zum Anschluss an eine dickwandige Rohrleitung oder an eine Rohrleitung mit einem Innendurchmesser dient, der größer ist als der Innendurchmesser des Rohrabschnitts, so dass diese Rohrleitung im Vergleich zu dem Rohrabschnitt des Muffenadapters als die größere Rohrleitung bezeichnet werden kann. Der Dichtung gegenüberliegend ist das andere Ende des Rohrabschnitts als Muffen- oder Spitzende derart ausgestaltet, dass es an die weiterführende Rohrleitung, die als die kleinere Rohrleitung bezeichnet werden kann, mit einer für diese kleinere Rohrleitung typischen Muffenverbindung anschließbar ist.

Eine überraschende, andere Verwendung des vorschlagsgemäßen Muffenadapters liegt darin, bei einer so genannten Hauseinführung oder Mauereinführung die Rohrleitung gegenüber dem umgebenden Mauerwerk eines Gebäudes abzudichten. In diesem Fall ist die Dichtung vorteilhaft nicht an einem Ende des Rohrabschnitts angeordnet, sondern dort, wo der Rohrabschnitt von dem Mauerwerk des Gebäudes umgeben ist, während die beiden Enden des Rohrabschnitts im Abstand davon als Muffen- und als Spitzende ausgestaltet sind und den Anschluss zusätzlicher Abschnitte der Rohrleitung außerhalb und innerhalb des Gebäudes ermöglichen. Nachfolgend wird der Muffenadapter stets anhand einer Anwendung erläutert, bei welcher er den Anschluss der oben erläuterten kleineren Rohrleitung an ein Muffenende der oben erläuterten größeren Rohrleitung ermöglicht.

In der Praxis weisen die Muffen häufig eine Einstecktiefe von lediglich bis zu 80 mm auf.

Vorteilhaft kann die Dichtung mehrere außen zirkumferent umlaufende Vorsprünge aufweisen, beispielsweise bei gleichbleibender Wandstärke in Form von welligen bzw. wulstartigen Verläufen, oder indem sie stark unterschiedliche Wandstärken aufweist und somit umlaufende Rippen bildet. Durch derartige Vorsprünge wird die Dichtwirkung der Dichtung gegenüber der inneren Oberfläche der Muffe, welche den Muffenadapter aufnimmt, verbessert. Zudem können diese Vorsprünge widerhakenartig ausgestaltet sein und somit die Dichtung gegen Verschieben sichern.

Vorteilhaft kann vorgesehen sein, die gespreizte Anordnung der Dichtung zuverlässig mit Hilfe entsprechender Sicherungselemente beizubehalten, wodurch auch eine Rückschubsicherung bewirkt wird. Hierzu kann beispielsweise eine Sperrkralle vorgesehen sein. Die Sperrkralle ist dabei auf der radial inneren Seite des jeweiligen Elements vorgesehen, so dass sie der äußeren Oberfläche des Rohrabschnitts anliegt und zwar in einer schrägen Ausrichtung. Aufgrund dieser Schrägstellung ermöglicht die Sperrkralle eine Bewegung des beweglichen Elements, durch diese Schrägstellung wird jedoch eine Zurückbewegung dieses beweglichen Elements verhindert, so dass die Dichtung zuverlässig ihre gespreizte Anordnung beibehält.

Die Sperrkralle kann aus Metall oder Kunststoff bestehen. Als vorteilhaft hat sich in ersten Versuchen erwiesen, dass sie durch einen flachen Blechzuschnitt gebildet sein kann. Dieser gräbt sich aufgrund seiner Schrägstellung in die Oberfläche des Rohrabschnitts ein, so dass der Sperreffekt, welcher eine Zurückbewegung des beweglichen Elements verhindert umso stärker wird, je größer die Kräfte werden, die eine solche Zurückbewegung zu verursachen bestrebt sind.

Wirtschaftlich vorteilhaft kann eine Mehrzahl von Sperrkrallen vorgesehen sein, die um den Umfang des Rohrabschnitts verteilt an dem erwähnten beweglichen Element vorgesehen sind, wobei diese Mehrzahl von Sperrkrallen vorteilhaft durch ein einziges Bauteil gebildet werden, nämlich durch einen Blechring, der sich um den Rohrabschnitt herum erstreckt.

Vorschlagsgemäß sind die Dehnelemente als Kniehebel ausgestaltet. In seinem mittleren Bereich ist ein solcher Kniehebel nahe dem Rohrabschnitt, oder sogar dem Rohrabschnitt anliegend, gelenkig gelagert. Zur Führung des Kniehebels kann das Lager eine Vertiefung aufweisen, die außen im Rohrabschnitt vorgesehen ist, z. B. als umlaufende Nut, oder einen Vorsprung aufweisen, der außen am Rohrabschnitt vorgesehen ist, z. B. als umlaufender Ring, oder in Form von mehreren separaten Elementen wie Schrauben, Stiften oder dergleichen. Von diesem mittleren Bereich aus erstreckt sich ein erster Hebelarm vom Rohrabschnitt weg radial nach außen, und ein zweiter, gegenüberliegender Hebelarm liegt dem zweiten, beweglichen, nach außen dehnbaren Abschnitt der Dichtung an. Wenn der erste Hebelarm an den Rohrabschnitt herangeführt wird, wird der zweite Hebelarm vom Rohrabschnitt radial weiter nach außen bewegt und die Dichtung auf diese Weise gedehnt, so dass sie einen größeren äußeren Durchmesser aufweist.

Bei einem solchen Muffenadapter kann vorteilhaft vorgesehen sein, dass die Dichtung sich von dem Bereich, wo sie dem zweiten Hebelarm anliegt, mit einem im Wesentlichen U-förmigen Querschnitt bis unter den mittleren Bereich des Kniehebels erstreckt. Mit ihrem im Wesentlichen U-förmigen Querschnitt umgibt die Dichtung also den zweiten Hebelarm des Kniehebels. Sie wird also einerseits radial nach außen verpresst, nämlich wo sie von dem zweiten Hebelarm nach außen gedehnt wird, und sie wird andererseits radial nach innen gegen den Rohrabschnitt gepresst, nämlich wo sie zwischen dem mittleren Bereich des Kniehebels und dem Rohrabschnitt verläuft.

Die Kniehebel des Muffenadapters können vorteilhaft auf dem Rohrabschnitt gegen axiale Verschiebungen gesichert und hierzu ortsfest fixiert sein. Dazu kann ein Ring auf dem Rohrabschnitt angeordnet sein, und die Kniehebel umgreifen diesen Ring mit ihrem jeweiligen mittleren Bereich wenigstens teilweise.

Eine vorteilhafte Weiterbildung eines solchen Muffenadapters kann darin bestehen, dass der Ring als Exzenter ausgestaltet ist, so dass einerseits der Rohrabschnitt exzentrisch gegenüber beispielsweise dem Muffenende eines benachbarten Rohres angeordnet werden kann, um im unteren Umfangsabschnitt des Rohrabschnitts einen sohlengleichen Anschluss an dieses benachbarte Rohr zu ermöglichen. Da um die den Umfang des Rohrabschnitts verteilt angeordneten Kniehebel mittels des Exzenter-Rings unterschiedliche Abstände ihres jeweiligen mittleren Bereichs zur Mittelachse des Rohrabschnitts aufweisen, und zwar vorteilhaft in der Art, dass sie im Wesentlichen konzentrisch um die Mittelachse des benachbarten Rohres verteilt angeordnet sind, können sämtliche Kniehebel annähernd gleich weit gespannt werden und gewährleisten so einen gleichmäßigen Anpressdruck der Dichtung über ihren gesamten Umfang an das erwähnte Muffenende des benachbarten Rohres. Je nach den geometrischen Ausgestaltungen des erwähnten benachbarten Rohres können unterschiedliche Exzenter-Ringe vorgesehen sein, die sich hinsichtlich ihrer äußeren Durchmesser und / oder inneren Durchmesser und / oder hinsichtlich ihrer Exzentrizität unterscheiden können.

Bei Verwendung eines Exzenter-Rings kann der Muffenadapter vorteilhaft mit einer Scheitelmarkierung am höchsten Punkt seines Umfangs versehen sein: so kann von außen sichtbar die korrekte Einbaulage des Muffenadapters überprüft und sichergestellt werden

Der Kontakt zwischen dem zweiten Hebelarm und dem zweiten Abschnitt der Dichtung kann vorteilhaft mittels einer Druckplatte erfolgen, so dass eine möglichst großflächige Dehnung der Dichtung ermöglicht wird. Zudem wird das Material der Dichtung dadurch vor mechanischen Beschädigungen geschont, dass durch diese Druckplatte die Dehnkraft großflächig verteilt auf die Dichtung einwirkt.

Die Anbindung der Druckplatte an den zweiten Hebelarm kann vorteilhaft mittels einer gelenkigen Lagerung der Druckplatte erfolgen. Auf diese Weise passt sich die Druckplatte optimal an den gedehnten zweiten Abschnitt der Dichtung an. Reibungskräfte zwischen diesem zweiten Abschnitt der Dichtung und der Druckplatte, welche ansonsten eine weitere Dehnung der Dichtung erschweren könnten, können auf diese Weise minimiert werden.

Im Vergleich zu dieser Druckplatte kann der Kniehebel in seinem mittleren Bereich, wo er kippbeweglich gelagert ist, deutlich schmaler ausgestaltet sein. Aufgrund der gebogenen Oberfläche des Rohrabschnitts, welcher der Kniehebel ggf. anliegt, stellt dies in allen Kippstellungen des Kniehebels eine gleichmäßige Lagerung des Kniehebels sicher. Alternativ dazu kann eine punktuelle Druckbelastung des Rohrabschnitts, insbesondere bei einer vergleichsweise geringen Wandstärke des Rohrabschnitts, dadurch vermieden werden, dass der Kniehebel in seinem mittleren Bereich, wo er kippbeweglich gelagert ist, bewusst breit ausgestaltet ist. In diesem Fall kann die Kontaktfläche, mit welcher der Kniehebel dem Rohrabschnitt anliegt, in zweifacher Hinsicht gebogen verlaufen, ähnlich wie ein Zylinder, der jedoch entlang seiner Längsachse tailliert ist: einerseits verläuft die Kontaktfläche parallel zur Kippachse, dem Umfang des Rohrabschnitts folgend, konkav gebogen, so dass eine möglichst großflächige Abstützung des Kipphebels am Rohrabschnitt ermöglicht wird. Andererseits quer zur Kippachse konvex gebogen, so dass in sämtlichen Kippstellungen dieser gewünschte Kontakt mit dem Rohrabschnitt sichergestellt ist.

Abgesehen von der so erzielbaren Reduzierung der Druckbelastung, die auf den Rohrabschnitt einwirkt, wirkt sich die breite Ausgestaltung des Kipphebels auch positiv auf eine Verschiebesicherung des Kniehebels aus: beispielsweise kann der Kipphebel mittels eines Halte- bzw. Spannbandes an dem Rohrabschnitt ortsfest fixiert werden. Um die Kippbeweglichkeit nach wie vor zu ermöglichen, verläuft dieses Halte- bzw. Spannband vorzugsweise im mittleren Bereich des Kniehebels, möglichst auf Höhe der Kippachse. Die breite Ausgestaltung des Kipphebels in diesem Bereich reduziert die auf das Halte- bzw. Spannband einwirkende Flächenpressung, so dass hohe Halte- bzw. Spannkräfte bei gleichzeitiger Materialschonung des Halte- bzw. Spannbandes ermöglicht werden.

Die Spannbewegung der ersten Hebelarme kann vorteilhaft dadurch erfolgen, dass ein flexibles Spannelement um sämtliche Kniehebel herum verläuft, beispielsweise eine Spannschelle oder ein Spannseil. Entsprechende Führungsflächen können vorteilhaft an den ersten Hebelarmen der Kniehebel vorgesehen sein, um auf diese Weise zu verhindern, dass das flexible Spannelement von einem der ersten Hebelarme während des Spannvorgangs abrutscht oder auch später, so dass durch die Führungsflächen sichergestellt werden kann, dass die Kniehebel jeweils ihre gewünschte Spannstellung beibehalten.

Der Rohrabschnitt des Muffenadapters ist in dem Bereich, mit welchem er in die Muffe der vorhandenen Rohrleitung eingesteckt wird, zylindrisch ausgestaltet, wie bereits eingangs erläutert wurde. Das gegenüberliegende Ende des Rohrabschnitts kann als Spitzende ausgestaltet sein, so dass der Rohrabschnitt insgesamt zylindrisch ausgestaltet ist und wie ein Zwischenstück oder Adapterstück zum Anschluss zweier Muffen dient, nämlich einerseits einer Muffe mit vergleichsweise großer Wandstärke, beispielsweise aus Beton, und andererseits der Muffe eines Kunststoffrohrs mit vergleichsweise geringerer Wandstärke. Das gegenüberliegende Ende des Rohrabschnitts kann jedoch wahlweise auch als Muffenende ausgestaltet sein, so dass die Rohrleitung mit unveränderter Ausrichtung ihrer einzelnen Rohre weitergeführt werden kann und mithilfe des Muffenadapters lediglich ein Werkstoffwechsel beispielsweise von Beton oder Keramik zu Kunststoff ermöglicht ist.

Um eine mechanische Belastung der Kniehebel zu verringern, die am oberen Umfangsabschnitt des Muffenadapters angeordnet sind, kann nach dem Dehnen der Dichtung vorteilhaft ein Stützmaterial unter die freien, nicht der Dichtung anliegenden Enden der Kniehebel verbracht werden. Es kann sich dabei um eine aushärtende Knet- oder Vergussmasse handeln, oder um Festkörper wie Distanzelemente, Keile oder dergleichen. Wenn anschließend beispielsweise ein Graben verfüllt wird, in dem sich der Muffenadapter befindet, werden somit Auflasten, die von oben auf den Muffenadapter einwirken, und die zu einer Verformung oder Beschädigung der Kniehebel führen könnten, zuverlässig abgeleitet. Die Auflasten können einerseits vom Gewicht des Füllmaterials - oder von dessen Aufprallenergie - beim Verfüllen des Grabens herrühren, oder von einer anschließenden Verdichtung dieses Füllmaterials, wenn beispielsweise darüber eine Verkehrsfläche geschaffen werden soll.

Ausführungsbeispiele der Erfindung werden anhand der rein schematischen Darstellungen nachfolgend näher erläutert. Dabei zeigt
- Fig. 1: ein erstes Ausführungsbeispiel in einer Ansicht auf einen in Längsrichtung geschnittenen Muffenadapter,
- Fig. 2: eine Variante des ersten Ausführungsbeispiels, und
- Fig. 3: einen Längsschnitt durch einen in einer Muffe befindlichen Muffenadapter.

In den Zeichnungen ist mit 1 insgesamt ein Muffenadapter bezeichnet, der einen Rohrabschnitt 2 aufweist sowie eine außen zirkumferent um den Rohrabschnitt 2 herum verlaufende Dichtung 3. Zwischen dem Rohrabschnitt 2 und der Dichtung 3 ist eine Vielzahl von Dehnelementen angeordnet.

Ein Metallring 10 weist eine Vielzahl von Sperrkrallen 11 auf, die der Außenseite des Rohrabschnitts 2 anliegen. Durch ihre Schrägstellung wirken sie wie Widerhaken; eine Zurückbewegung wird durch die Sperrkrallen 11 verhindert. Diese graben sich vielmehr bei einer beginnenden solchen Rückbewegung in das Material des Rohrabschnitts 2 ein, so dass sich die Sperrwirkung der Sperrkrallen 11 bei zunehmender Belastung verstärkt.

Die Dichtung 3 reicht mit einem ersten Abschnitt 15 bis an den Rohrabschnitt 2 heran und liegt dem Rohrabschnitt 2 dicht an. Die Dichtung 3 kann mit diesem ersten Abschnitt beispielsweise mit dem Rohrabschnitt 2 verklebt sein. Auf diese Weise ist ein fluiddichter Übergang vom Inneren des Rohrabschnitts 2 bis in das Innere der Muffe sichergestellt, wenn die Dichtung 3 so weit gedehnt worden ist, dass sie der Muffe dicht anliegt. Von diesem Ende des Rohrabschnitts 2 aus schließt sich an den ersten Abschnitt 15 der Dichtung 3 ein zweiter Abschnitt 16 an, welcher mittels des Dehnelements gedehnt werden kann.

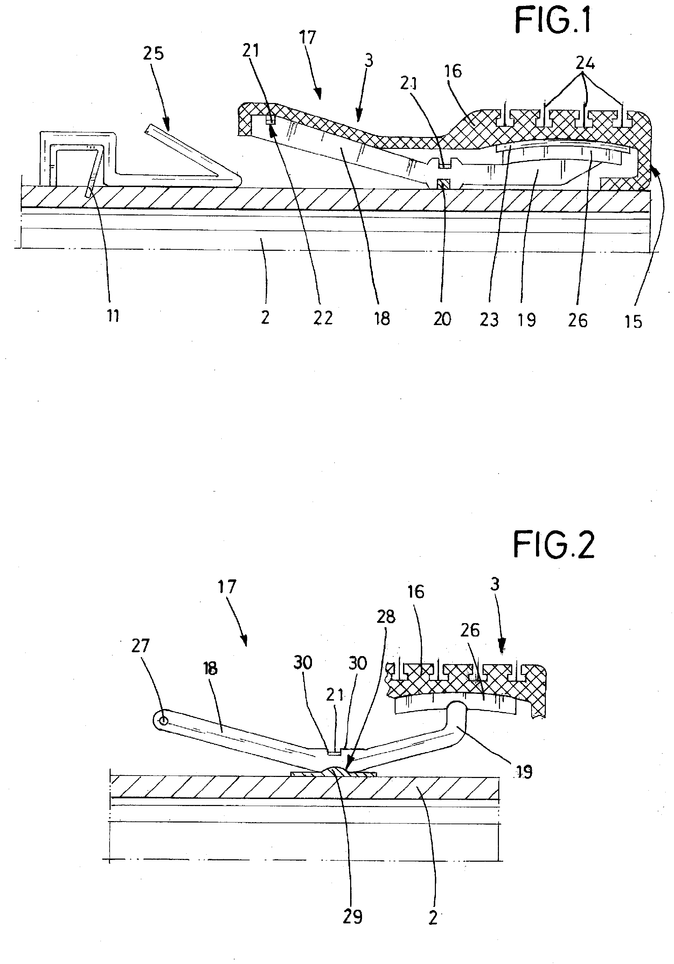

Fig. 1 zeigt ein Ausführungsbeispiel, bei welchem um den Rohrabschnitt 2 herum als Dehnelemente mehrere Kniehebel 17 angeordnet sind. Ein Ring 20 dient zur ortsfesten Fixierung des Kniehebels 17, so dass dieser nicht in axialer Richtung auf dem Rohrabschnitt 2 verschoben werden kann. Der Ring 20 kann beispielsweise aus Metall oder Kunststoff bestehen. Der Kniehebel 17 weist einen ersten Hebelarm 18 auf, der sich zunächst, wenn sich das Dehnelement in seiner Ruhestellung befindet, zu seinem freien Ende hin von dem Rohrabschnitt 2 entfernt. Der Kniehebel 17 weist einen zweiten Hebelarm 19 auf, der in der dargestellten Ruhestellung des Dehnelements nahe am Rohrabschnitt 2 verläuft. Dieser zweite Hebelarm 19 untergreift den zweiten, nach außen beweglichen Abschnitt 16 der Dichtung 3.

Aus seiner dargestellten Ruhestellung kann das in Fig. 1 dargestellte Dehnelement in eine Spannstellung gebracht werden, indem der erste Hebelarm 18 an den Rohrabschnitt 2 herangedrückt wird. Dies kann beispielsweise mittels einer Spannschelle 21 erfolgen, für die im ersten Hebelarm 18 eine Spannnut 22 vorgesehen ist. Rein beispielhaft ist eine ähnliche Spannschelle 21 im mittleren Bereich, zwischen den beiden Hebelarmen 18 und 19 des Kniehebels 17 vorgesehen. Sie dient in Verbindung mit dem Ring 20 dazu, den Kniehebel 17 ortsfest auf dem Rohrabschnitt 2 festzulegen. Gegebenenfalls kann diese Fixierungs-Spannschelle 21 entfallen, wenn z. B. allein durch die Dichtung 3 bereits eine unerwünschte Verschiebung des Kniehebels 17 ausgeschlossen werden kann. Dies kann beispielsweise durch eine entsprechende Geometrie des Kniehebels 17 und der Dichtung 3 erreicht werden, indem die Dichtung 3 Abschnitte des Kniehebels 17 formschlüssig umfasst.

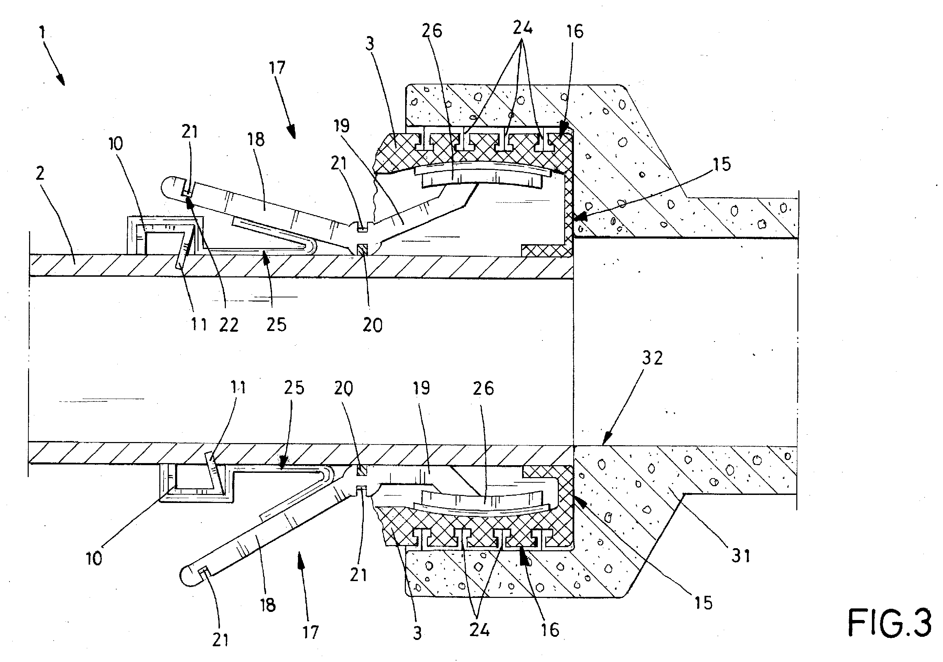

Eine Gleiteinlage 23 erleichtert die Betätigung des Kniehebels 17 beim Spannen und ermöglicht Relativbewegungen zwischen dem zweiten Hebelarm 19 des Kniehebels 17 und dem zweiten Abschnitt 16 der Dichtung 3. Krallen 24 sind am zweiten Abschnitt 16 der Dichtung 3 vorgesehen und erstrecken sich radial über diesen zweiten Abschnitt 16 hinaus nach außen. Sie können ähnlich wie die Sperrzungen 11 ausgestaltet sein, beispielsweise als nach außen ragende Abschnitte eines metallischen Rings, der allerdings flacher und insofern anders ausgestaltet ist als der Metallring 10 der Fig. 3.

Ein Fixierungskeil 25 dient bei diesem Ausführungsbeispiel zur Fixierung der Kniehebel 17 nach dem Spannvorgang. Der Fixierungskeil 25 wird hierzu in axialer Richtung auf dem Rohrabschnitt 2 verschoben und ist mittels einer Sperrzunge 11 gegen eine unerwünschte Rückbewegung gesichert.

In der Draufsicht gesehen kann der Kniehebel 17 je nach der Wandstärke bzw. der Druckbelastbarkeit des Rohrabschnitts 2 unterschiedlich ausgestaltet sein: beispielsweise kann er in einer ersten Ausgestaltung eine taillierte, beispielsweise annähernd X-förmige Kontur aufweisen, nämlich eine breite Druckplatte 26, die an den zweiten Hebelarm 19 anschließt, so dass die Dichtung 3 großflächig nach außen gedehnt werden kann. Und auch der erste Hebelarm 18 kann sich zu seinem freien Ende hin, insbesondere im Bereich der Spannnut 22 verbreitern, so dass die Belastung der Spannschelle 21 zugunsten deren Haltbarkeit auf eine große Fläche der Spannschelle 21 verteilt wird. Im mittleren Bereich hingegen, wo der Kniehebel 17 im Bereich des Rings 20 kippbeweglich gelagert ist, kann er vergleichsweise schmal ausgestaltet sein, um in den unterschiedlichen Kippstellungen der gebogenen Außenfläche des Rohrabschnitts 2 stets gleich gut anzuliegen. In einer zweiten Ausgestaltung kann er auch in seinem mittleren Bereich breit ausgestaltet sein, um mit möglichst geringen Flächenpressungen sowohl den Rohrabschnitt 2 als auch die Spannschelle 21 vor mechanischen Überlastungen zu schonen.

Beim Ausführungsbeispiel der Fig. 1 ist vorgesehen, dass die Druckplatte 26 fest mit dem zweiten Hebelarm 19 verbunden ist. Es kann sogar in Abwandlung des dargestellten Ausführungsbeispiels vorgesehen sein, dass die Druckplatte 26 den zweiten Hebelarm 19 bildet. Im Unterschied dazu ist beim Ausführungsbeispiel der Fig. 2 die Druckplatte 26 am Ende des zweiten Hebelarms 19 gelenkig gelagert, so dass Relativbewegungen zwischen der Druckplatte 26 und dem zweiten Abschnitt 16 der Dichtung 3 minimiert werden und beispielsweise eine Gleiteinlage 23 nicht erforderlich ist.

Weiterhin unterscheidet sich das Ausführungsbeispiel der Fig. 2 von dem der Fig. 1 dadurch, dass am ersten Hebelarm 18 keine Spannnut 22 vorgesehen ist, sondern vielmehr eine Öse 27, durch die ein Spannseil gezogen werden kann.

Zur kippbeweglichen Lagerung des Kniehebels 17 weist dieser in seiner Mitte, zwischen den beiden Hebelarmen 18 und 19, eine Lagermulde 28 auf, die mit einer Gelenkwulst 29 zusammenwirkt. Die Gelenkwulst 29 ist als Band aus Metall oder Kunststoff ausgestaltet, welches sich über den Umfang des Rohrabschnitts 2 erstreckt und beispielsweise durch Verklebung auf dem Rohrabschnitt 2 ortsfest fixiert ist. Der Kniehebel 17 gleitet mit seiner Lagermulde 28 während seiner Kippbewegung auf dem Gelenkwulst 29 ab und ist in Längsrichtung des Rohrabschnitts 2 seinerseits dadurch fixiert, dass er mittels einer Spannschelle 21 an die Gelenkwulst 29 angepresst ist, wobei der zuverlässige Sitz der Spannschelle 21 auf dem Kniehebel 17 durch zwei seitliche Führungen 30 sichergestellt wird.

Das erwähnte Band, welches die Gelenkwulst 29 bildet, kann radial innen kreisrund verlaufen, in Anpassung an den Rohrabschnitt 2, während es radial außen als Polygon ausgestaltet ist, so dass es als polygonaler Lagerring bezeichnet werden kann, wobei die Anzahl seiner äußeren Ecken bzw. der sich dazwischen erstreckenden geradlinigen Abschnitte der Anzahl der vorgesehenen Kniehebel 17 entspricht. Dadurch kann unter jedem Kniehebel 17 eine Gelenkwulst 29 bereitgestellt werden, die in Umfangsrichtung um den Rohrabschnitt 2 geradlinig verläuft und so dem jeweiligen Kniehebel 17 ein möglichst breites Kipplager bereitstellt. Dementsprechend kann auch der Kniehebel 17 in seinem mittleren Bereich zwischen den beiden Hebelarmen 18 und 19 vergleichsweise breit ausgestaltet sein. Durch dieses breite Lager werden die Druckkräfte, die der Kipphebel 17 auf den Rohrabschnitt 2 überträgt materialschonend mit einer möglichst geringen Flächenpressung verteilt und der Rohrabschnitt 2 dementsprechend geschont. In anderer Betrachtungsrichtung können dementsprechend, bei einer vorgegebenen höchstzulässigen Belastung des Rohrabschnitts 2 optimal hohe Spannkräfte der Kniehebel 17 und dementsprechend eine optimal dichte Anlage der Dichtung 3 an der Innenfläche der betreffenden Muffe ermöglicht werden, die den Muffenadapter 1 aufnimmt.

Für einen mittig zentrierten Sitz des Muffenadapters 1 bei Verwendung von Kniehebeln 17 als Dehnelemente werden sämtliche ersten Hebelarme 18 sämtlicher Kniehebel 17 gleichzeitig gespannt, beispielsweise durch Verwendung der erläuterten Spannschelle 21 bzw. des erwähnten Spannseils. Auch wenn die Dehnelemente als Keile 4 ausgestaltet sind können diese Dehnelemente sämtlich gleich stark gespannt werden, beispielsweise wenn mittels eines Treibrings 6 sämtliche Keile 4 gleich weit gegenüber ihrem jeweiligen Widerlager 5 bewegt werden.

Fig. 3 zeigt, dass es jedoch auch vorteilhaft sein kann, den Muffenadapter 1 exzentrisch in der betreffenden Muffe anzuordnen und hierzu die einzelnen Dehnelemente unterschiedlich stark zu spannen:
Eine Muffe 31 weist eine vergleichsweise große Wandstärke auf, wie dies beispielsweise bei einem Betonrohr der Fall ist. Der Rohrabschnitt 2 des Muffenadapters 1 hingegen besteht aus Kunststoff und weist eine vergleichsweise geringere Wandstärke auf. Um im tiefsten Bereich der Rohrleitung, nämlich im Bereich einer so genannten Rohrsohle 32, einen absatzlosen, höhengleichen Übergang von der Muffe 31 zum Muffenadapter 1 sicherzustellen, werden die Dehnelemente des Muffenadapters 1 entlang dem Umfang des Rohrabschnitts 2 unterschiedlich stark gespannt.

Im oberen Umfangsbereich sind die Kniehebel 17 weiter in ihre Spannstellung gekippt, ihre ersten Hebelarme 18 also näher an den Rohrabschnitt 2 herangeführt, so dass ihre zweiten Hebelarme 19 den zweiten Abschnitt 16 der Dichtung 3 weit dehnen. Rein schematisch ist nicht die Anlage der Dichtung 3 innen an der Muffe 31 dargestellt, sondern vielmehr ein Kontakt der Krallen 24 an der inneren Oberfläche der Muffe 31. Im unteren Umfangsbereich hingegen sind die Kniehebel 17 weit weniger weit ihre Spannstellung gekippt, so dass die Dichtung 3 in diesem unteren Umfangsbereich weniger stark gedehnt worden ist.

Der Arbeitsablauf bei dieser Ausrichtung des Rohrabschnitts 2 innerhalb der Muffe 31 ist wie folgt: zunächst werden sämtliche Dehnelemente gespannt, in diesem Fall also sämtliche Kniehebel 17. Dies erfolgt durch Betätigung der Spannschelle 21, die auf die ersten Hebelarme 18 sämtlicher Kniehebel 17 einwirkt, so dass die Dichtung 3 entlang ihres gesamten Umfangs gleichmäßig von innen an die Muffe 31 angepresst wird. Anschließend werden die Fixierungskeile 25 unter die ersten Hebelarme 18 getrieben. Aufgrund der unterschiedlichen Höhen der Fixierungskeile 25 werden unterschiedliche Abstände zwischen dem Rohrabschnitt 2 und den ersten Hebelarmen 18 der einzelnen Kniehebel 17 eingestellt, der Rohrabschnitt 2 also innerhalb der Kniehebel 17 und der umlaufenden Dichtung 3 aus einer zunächst zentrierten Anordnung in radialer Richtung nach unten versetzt.

Auch von außen, nämlich während der Montage des Muffenadapters 1, lässt sich diese Ausrichtung des Rohrabschnitts 2 kontrollieren, ohne in das Innere der Rohrleitung hereinsehen zu müssen: wenn die Höhe des Fixierungskeiles 25, der im untersten Bereich des Muffenadapters 1 verwendet wird, also im Bereich der Rohrsohle 32, der Höhe des obersten Fixierungskeils 25 plus der Wandstärke des Rohrabschnitts 2 entspricht, so ergibt sich der in Fig. 3 dargestellte absatzlose Übergang vom Muffenadapter 1 zu der angrenzenden Muffe 31.

Je nach Anzahl der verwendeten Fixierungskeile 25 ergibt sich dann in abgestufter Weise die jeweilige Höhe, die jeder Fixierungskeil 25 zwischen dem obersten und dem untersten Fixierungskeil 25 aufweisen sollte. Wenn die Fixierungskeile 25 zu einem gemeinsamen, ringförmigen Bauteil zusammengefasst sind bzw. als einzelne Laschen von einem gemeinsamen Ring abstehen, so vereinfacht ein solches Bauteil die Handhabung der Fixierungskeile 25 im Vergleich zur Handhabung mehrerer separater Fixierungskeile 25. In Anpassung an typische Innendurchmesser von Muffen 31 können die Fixierungskeile 25 eines solchen Rings bereits werkseitig die entsprechend abgestuften Höhen aufweisen, bzw. wenn sie in Form eines einteiligen Rings ausgestaltet sind, kann dieser Ring eine sich entlang dem Ringumfang kontinuierlich ändernde Querschnittsgeometrie aufweisen.

In ähnlicher Weise wie für die Fixierungskeile 25 beschrieben, können auch die Kniehebel 17 zu einem gemeinsam handhabbaren Bauteil zusammengefasst sein, beispielsweise indem diese jeweiligen Bauteile als Kunststoffbauteile im Spritzguss hergestellt und durch dünne Stege miteinander verbunden sind. Oder sie können zunächst als separate Bauteile hergestellt werden und anschließend in Art einer Vormontage mittels eines flexiblen Bandes miteinander verbunden werden. Die so geschaffene Baugruppe, die mehrere Bauteile in Form der Fixierungskeile 25 oder Kniehebel 17 enthält, kann entweder als länglicher Streifen oder als geschlossener Ring vorliegen und erleichtert die Anbringung dieser Bauteile auf dem Rohrabschnitt 2.

Wenn die Kniehebel 17 mit ihren jeweiligen mittleren Abschnitten auf einem Ring 20 angeordnet sind, der als Exzenter-Ring ausgestaltet ist, so dass die um den Umfang des Rohrabschnitts 2 verteilt angeordneten Kniehebel 17 unterschiedliche Abstände ihres jeweiligen mittleren Bereichs zur Mittelachse des Rohrabschnitts 2 aufweisen, können die Fixierungskeile 25 gegebenenfalls entfallen.

## Patentansprüche

1. Muffenadapter (1),
• mit einem zylindrischen Rohrabschnitt (2),
• einer den Rohrabschnitt (2) zirkumferent außen umgebenden Dichtung (3) aus einem elastisch verformbaren Werkstoff,
wobei die Dichtung (3) einen ersten Abschnitt (15) aufweist, mit welchem sie dicht an den Rohrabschnitt (2) anschließt,
sowie einen zweiten Abschnitt (16), der gegenüber dem Rohrabschnitt (2) radial nach außen beweglich ist,
• und mit wenigstens einem Dehnelement,
welches zwischen dem Rohrabschnitt (2) und dem zweiten Abschnitt (16) der Dichtung (3) angeordnet ist,
und welches radial nach außen beweglich ist, derart, dass der Außendurchmesser der Dichtung (3) in Abhängigkeit von der jeweiligen Stellung des Dehnelements veränderlich ist,
**dadurch gekennzeichnet,**
**dass** das Dehnelement als Kniehebel (17) ausgestaltet ist,
wobei der Kniehebel (17) einen ersten Hebelarm (18) aufweist, der von einer vom Rohrabschnitt (2) radial weiter entfernten Ruhestellung in eine dem Rohrabschnitt (2) radial nähere Spannstellung beweglich ist,
sowie einen zweiten Hebelarm (19) aufweist, der dem zweiten Abschnitt (16) der Dichtung (3) radial von innen anliegt, und der von einer dem Rohrabschnitt (2) näheren Ruhestellung in eine vom Rohrabschnitt (2) radial weiter entfernte Dehnstellung beweglich ist, in welcher die Dichtung (3) einen vergleichsweise größeren Außendurchmesser aufweist
und wobei der Kniehebel (17) in seinem mittleren Bereich zwischen den beiden Hebelarmen (18, 19) kippbeweglich gelagert ist.

2. Muffenadapter nach Anspruch 1,
**dadurch gekennzeichnet,**
**dass** die Dichtung (3) sich von dem Bereich, wo sie dem zweiten Hebelarm (19) anliegt, mit einem im Wesentlichen U-förmigen Querschnitt bis unter den mittleren Bereich des Kniehebels (17) erstreckt.

3. Muffenadapter nach Anspruch 1 oder 2,
**dadurch gekennzeichnet,**
**dass** auf dem Rohrabschnitt (2) ein Ring (20) zur ortsfesten Fixierung des Kniehebels (17) angeordnet ist,
wobei der Kniehebel (17) mit seinem mittleren Bereich den Ring (20) wenigstens teilweise umgreift.

4. Muffenadapter nach Anspruch 3
**dadurch gekennzeichnet,**
**dass** der Ring (20) als Exzenter ausgestaltet ist, derart, dass um den Umfang des Rohrabschnitts (2) verteilt angeordnete Kniehebel (17) unterschiedliche Abstände ihres jeweiligen mittleren Bereichs zur Mittelachse des Rohrabschnitts (2) aufweisen.

5. Muffenadapter nach einem der vorhergehenden Ansprüche,
**dadurch gekennzeichnet,**
**dass** die Dichtung (3) mehrere außen zirkumferent umlaufende Vorsprünge (12) aufweist.

6. Muffenadapter nach einem der vorhergehenden Ansprüche,
**dadurch gekennzeichnet,**
**dass** ein entlang dem Rohrabschnitt (2) in axialer Richtung zur Spreizung der Dichtung (3) bewegliches Element auf seiner radial inneren Seite mit einer Sperrkralle (11) versehen ist,
wobei die Sperrkralle (11) der äußeren Oberfläche des Rohrabschnitts (2) schräg anliegt,
und eine Bewegung dieses beweglichen Elements ermöglichend sowie dessen Zurückbewegung verhindernd ausgerichtet ist.

7. Muffenadapter nach Anspruch 6,
**dadurch gekennzeichnet,**
**dass** die Sperrkralle (11) durch einen flachen, gegenüber der Oberfläche des Rohrabschnitts (2) schräggestellten Blechzuschnitt gebildet ist.

8. Muffenadapter nach Anspruch 7,
**dadurch gekennzeichnet,**
**dass** ein Blechring (10) vorgesehen ist, der eine Mehrzahl von Sperrkrallen (11) bildet.

9. Muffenadapter nach einem der vorhergehenden Ansprüche,
**dadurch gekennzeichnet,**
**dass** der zweite Hebelarm (19) gelenkig an eine Druckplatte (26) anschließt,
wobei die Druckplatte (26) dehnungswirksam dem zweiten Abschnitt (16) der Dichtung (3) anliegt.

10. Muffenadapter nach einem der vorhergehenden Ansprüche,
**dadurch gekennzeichnet,**
**dass** der erste Hebelarm (18) eine Führungsfläche aufweist zur Aufnahme eines Spannelements, welches um den Rohrabschnitt (2) herum verläuft und dabei mehreren Führungsflächen mehrerer erster Hebelarme (18) mehrerer Kniehebel (17) anliegt.

11. Muffenadapter nach einem der vorhergehenden Ansprüche,
**dadurch gekennzeichnet,**
**dass** der Kniehebel (17) in seinem mittleren Bereich, wo er kippbeweglich gelagert ist, einem geradlinigen äußeren Umfangsabschnitt eines polygonalen Lagerrings anliegt.

12. Muffenadapter nach einem der vorhergehenden Ansprüche,
**dadurch gekennzeichnet,**
**dass** die Dichtung (3) zwischen dem ersten Abschnitt (15) und dem zweiten Abschnitt (16) eine die radiale Entfernung des zweiten Abschnitts (16) von dem Rohrabschnitt (2) erleichternde Dehnfuge aufweist.

13. Verwendung eines Muffenadapters nach einem der vorhergehenden Ansprüche zur Abdichtung einer Rohrleitung gegenüber einer Gebäudewand bei einer so genannten Mauereinführung.

## Claims

1. Sleeve adapter (1),
• comprising a cylindrical tubing section (2),
• a seal (3) that is made from an elastically deformable material and encloses the tubing section (2) circumferentially on the outside, where the seal (3) incorporates a first section (15) by which it sits tightly against the tubing section (2) as well as a second section (16) which can be moved radially outwards relative to the tubing section (2),
• and comprising at least one expanding element that is arranged between the tubing section (2) and the second section (16) of the seal (3) and which can be moved radially outwards in such a way that the outside diameter of the seal (3) can be changed according to whichever position the expanding element is in, **characterised in that** the expanding element is designed as a toggle lever (17), where the toggle lever (17) incorporates a first lever arm (18) that can be moved from a rest position that is set radially further away from the tubing section (2) into a clamping position that is radially closer to the tubing section (2),
and incorporates a second lever arm (19) that sits against the second section (16) of the seal (3) radially from inside and that can be moved from a rest position that is radially closer to the tubing section (2) into an expanding position that is radially further away from the tubing section (2) and in which the seal (3) has a comparatively larger outside diameter
and where the toggle lever (17) is mounted between the two lever arms (18, 19) by the middle section of the toggle lever (17) so that it can be tilted.

2. Sleeve adapter in accordance with claim 1,
**characterised in that** the seal (3) extends with an essentially U-shaped cross-section from the section where it sits against the second lever arm (19) to below the middle section of the toggle lever (17).

3. Sleeve adapter in accordance with claim 1 or 2,
**characterised in that** a ring (20) is arranged on the tubing section (2) to immovably fasten the toggle lever (17), where the toggle lever (17) at least partly encloses the ring (20) by the middle section of the toggle lever (17).

4. Sleeve adapter in accordance with claim 3,
**characterised in that** the ring (20) is designed as a cam in such a way that toggle levers (17) are arranged at intervals around the circumference of the tubing section (2) so that each of their middle sections is set at a different distance from the central axis of the tubing section (2).

5. Sleeve adapter in accordance with any one of the foregoing claims,
**characterised in that** the seal (3) incorporates a number of projecting portions (12) that extend circumferentially around it on the outside.

6. Sleeve adapter in accordance with any one of the foregoing claims,
**characterised in that** an expanding element that can be moved in an axial direction along the tubing section (2) to expand the seal (3) is provided with a locking prong (11) on its radially inner side,
where the locking prong (11) sits obliquely against the outside surface of the tubing section (2),
and is oriented so as to enable this movable element to move and to prevent it from moving back.

7. Sleeve adapter in accordance with claim 6,
**characterised in that** the locking prong (11) is formed by a flat, shaped steel plate that is set at an oblique angle to the surface of the tubing section (2).

8. Sleeve adapter in accordance with claim 7,
**characterised in that** a metal ring (10) that forms a plurality of locking prongs (11) is provided for.

9. Sleeve adapter in accordance with any one of the foregoing claims,
**characterised in that** the second lever arm (19) sits jointedly against a thrust plate (26) where the thrust plate (26) lies expandably against the second section (16) of the seal (3).

10. Sleeve adapter in accordance with any one of the foregoing claims,
**characterised in that** the first lever arm (18) incorporates a guide surface to receive a clamping element that extends around the tubing section (2) and sits against a number of guide surfaces of a number of first lever arms (18) of a number of toggle levers (17).

11. Sleeve adapter in accordance with any one of the foregoing claims,
**characterised in that** the toggle lever (17) sits against a rectilinear outside circumferential section of a polygonal bearing ring by the middle section of the toggle lever (17) where it is mounted so as to be able to tilt.

12. Sleeve adapter in accordance with any one of the foregoing claims,
**characterised in that** the seal (3) incorporates between the first section (15) and the second section (16) an expansion joint to facilitate radial removal of the second section (16) from the tubing section (2).

13. Use of a sleeve adapter in accordance with any one of the foregoing claims for sealing a tubing-line off from a building wall in a so-called wall lead-in.

## Revendications

1. Adaptateur à manchon (1),
• comprenant un segment de tuyau cylindrique (2),
• un joint (3) en matériau élastiquement déformable entourant la circonférence extérieure du segment de tuyau (2), sachant que le joint (3) présente un premier segment (15) par lequel il applique de manière étanche contre le segment de tuyau (2), ainsi qu'un deuxième segment (16) déplaçable radialement vers l'extérieur par rapport au segment de tuyau (2),
• et comprenant au moins un élément de dilatation disposé entre le segment de tuyau (2) et le deuxième segment (16) du joint (3) et qui est déplaçable radialement vers l'extérieur de façon que le diamètre extérieur du joint (3) soit variable en fonction de la position ponctuelle de l'élément de dilatation,
**caractérisé en ce que** l'élément de dilatation est configuré en genouillère (17), sachant que la genouillère (17) présente un premier bras de levier (18) déplaçable d'une position de repos plus éloignée radialement du segment de tuyau (2) vers une position de serrage radialement plus proche du segment de tuyau (2),
ainsi qu'un deuxième bras de levier (19) qui applique radialement de l'intérieur contre le deuxième segment (16) du joint (3) et qui est déplaçable d'une position de repos plus proche du segment de tuyau (2) vers une position de dilatation radialement plus distante du segment de tuyau (2), position dans laquelle le joint (3) présente un diamètre extérieur comparativement plus important
et sachant que la genouillère (17) se trouve, dans sa zone médiane, en appui basculant entre les deux bras de levier (18, 19).

2. Adaptateur à manchon selon la revendication 1,
**caractérisé en ce que** le joint (3) s'étend de la zone où il applique contre le deuxième bras de levier (19), avec une section essentiellement en forme de U jusqu'à la zone médiane de la genouillère (17).

3. Adaptateur à manchon selon la revendication 1 ou 2,
**caractérisé en ce que** sur le segment de tuyau (2) est disposé un anneau (20) permettant d'immobiliser sur place la genouillère (17), sachant que la genouillère (17) entoure au moins en partie la zone médiane de l'anneau (20).

4. Adaptateur à manchon selon la revendication 3,
**caractérisé en ce que** l'anneau (20) est configuré en excentrique de sorte que des genouillères (17) réparties sur la circonférence du segment de tuyau (2) présentent des écarts différents de leur zone médiane respective par rapport à l'axe médian du segment de tuyau (2).

5. Adaptateur à manchon selon l'une des revendications précédentes,
**caractérisé en ce que** le joint (3) présente plusieurs saillies (12) disposées circonférentiellement à l'extérieur.

6. Adaptateur à manchon selon l'une des revendications précédentes,
**caractérisé en ce qu'**un élément mobile dans le sens axial le long du segment de tuyau (2) pour expanser le joint (3) est muni d'une griffe de blocage (11) sur son côté intérieur radial,
sachant que la griffe de blocage (11) applique de manière oblique contre la surface extérieure du segment de tuyau (2),
et est orientée de manière à permettre un mouvement de cet élément mobile et à empêcher son mouvement de recul.

7. Adaptateur à manchon selon la revendication 6,
**caractérisé en ce que** la griffe de blocage (11) est formée par une tôle découpée plate se trouvant en plan incliné par rapport à la surface du segment de tuyau (2).

8. Adaptateur à manchon selon la revendication 7,
**caractérisé en ce qu'**est prévu un anneau en tôle (10) formant une multitude de griffes de blocage (11).

9. Adaptateur à manchon selon l'une des revendications précédentes,
**caractérisé en ce que** le deuxième bras de levier (19) est raccordé de manière articulée à une plaque de compression (26), sachant que la plaque de compression (26) applique de manière active en dilatation contre le deuxième segment (16) du joint (3).

10. Adaptateur à manchon selon l'une des revendications précédentes,
**caractérisé en ce que** le premier bras de levier (18) présente une surface de guidage servant à recevoir un élément de serrage situé autour du segment de tuyau (2) et qui applique ce faisant contre plusieurs surfaces de guidage de plusieurs premiers bras de levier (18) de plusieurs genouillères (17).

11. Adaptateur à manchon selon l'une des revendications précédentes,
**caractérisé en ce que** la genouillère (17) applique, dans sa zone médiane où elle est en appui basculant, contre un segment périphérique extérieur linéaire d'un anneau de palier polygonal.

12. Adaptateur à manchon selon l'une des revendications précédentes,
**caractérisé en ce que** le joint (3) présente, entre le premier segment (15) et le deuxième segment (16), un joint de dilatation facilitant l'éloignement radial du deuxième segment (16) par rapport au segment de tuyau (2).

13. Utilisation d'un adaptateur à manchon selon l'une des revendications précédentes pour étancher une conduite par rapport à un mur d'immeuble lors d'une introduction dite dans le mur.
